# EUROPÄISCHE PATENTANMELDUNG

(11) **EP 2 860 914 A1**
(43) Veröffentlichungstag der Anmeldung: **15.04.2015**
(21) Anmeldenummer: 13188535.2
(22) Anmeldetag: 14.10.2013
(51) Int. Cl.: H04L 12/58

(54) **Verfahren zur Steuerung eines kostenpflichtigen digitalen Nachrichtenverkehrs**

(71) Anmelder: Yumusak, Ali, 40239 Düsseldorf (DE)
(72) Erfinder: Yumusak, Ali, 40239 Düsseldorf (DE)
(74) Vertreter: Stenger, Watzke & Ring

(57) **Zusammenfassung**

Die Erfindung betrifft ein Verfahren zur Steuerung eines kostenpflichtigen digitalen Nachrichtenverkehrs, wobei eine Nachricht mittels eines Nachrichten-Servers von einer Versenderadresse an eine Empfängeradresse gesendet wird, und wobei ein Online-Buchungssystem eine zu dem Nachrichtenverkehr korrespondierende Zahlung bewirkt. Solche Verfahren werden verwendet, um beispielsweise online bestellte Produkte zu bezahlen. Um eine gewünschte Zeitnähe zwischen Bezahlung der Ware und Erhalt der Ware zu gewährleisten, schlägt die Erfindung vor, dass die Nachricht an der Empfängeradresse nur empfangen werden kann, wenn die korrespondierende Zahlung von einem der Empfängeradresse zugeordneten Zahlungskonto bewirkt wird.

## Beschreibung

Die Erfindung betrifft ein Verfahren zur Steuerung eines kostenpflichtigen digitalen Nachrichtenverkehrs, wobei Nachrichten mittels eines Nachrichten-Servers von einer Versenderadresse an eine Empfängeradresse gesendet werden, und wobei ein Online-Buchungssystem eine zu dem Nachrichtenverkehr korrespondierende Zahlung bewirkt.

Verfahren der vorgenannten Art sind im Stand der Technik bekannt. Sie dienen dazu, einen Nachrichtenverkehr, beispielsweise einen E-Mail-Verkehr, gebührenpflichtig zu machen, um somit die Versendung einer großen Menge unerwünschter Nachrichten (beispielsweise Spam-Mails) zu verhindern. Zusätzlich kann ein solches Verfahren auch dazu dienen, die Zahlung einer Warenbestellung zu bewirken.

Die Druckschrift EP 1 480 398 A1 offenbart beispielsweise eine Kostenpflicht für elektronische Post. Dabei muss ein E-Mail-Versender, welcher Daten zu einer kostenpflichtigen E-Mail-Adresse eines Empfängers schicken möchte, dafür bezahlen, dass diese Daten tatsächlich dem Empfänger zugestellt werden. Aufgrund dieser Kostenpflicht scheuen sich Versender von Spam-E-Mails, Nachrichten an solche E-Mail-Adressen zu versenden. Darüber hinaus kann das beschriebene Verfahren auch zur Abrechnung eines Warenkaufs verwendet werden, wobei die Bezahlung durch das Versenden einer E-Mail erfolgt. Der Käufer sendet dafür eine kostenpflichtige E-Mail an den Empfänger, beispielsweise einen Händler, wobei die Kosten für die E-Mail im Wesentlichen den Kosten der abzurechnenden Ware entsprechen und von der jeweiligen E-Mail-Adresse des Empfängers abhängen.

Obwohl das vorbekannte Verfahren insbesondere auch Vorteile bei der Abrechnung eines Gegenwertes für eine Ware oder einen Service aufweist, ergibt sich das Problem, dass der Kunde, d. h. der Versender der E-Mail, im Voraus durch seine E-Mail eine Bezahlung der Ware bewirkt, obwohl er die Ware bzw. den Service als Gegenwert noch nicht erhalten hat. Insbesondere bei Lieferverzögerungen kann es somit zu einer erheblichen Zeitspanne kommen, in welcher der Kunde die Ware bereits bezahlt hat ohne eine Gegenleistung dafür zu erhalten.

Es ist daher Aufgabe der vorliegenden Erfindung, ein Verfahren zur Steuerung eines kostenpflichtigen digitalen Nachrichtenverkehrs, insbesondere zur Bezahlung einer in Anspruch genommenen Ware oder Dienstleistung, zu schaffen, bei welchem der Nachrichtenverkehr und die Bezahlung der Ware nicht gekoppelt sein müssen.

Zur Lösung dieser Aufgabe schlägt die Erfindung ein Verfahren zur Steuerung eines kostenpflichtigen digitalen Nachrichtenverkehrs vor, bei welchem die Nachricht an der Empfängeradresse, d. h. empfängerseitig, nur empfangen werden kann, wenn die korrespondierende Zahlung von einem der Empfängeradresse zugeordneten Zahlungskonto bewirkt wird. Durch diese Ausgestaltung wird sichergestellt, dass die Bezahlung der Ware oder des Services und der Erhalt der Ware oder des Services annähernd zeitgleich erfolgen. Sofern der Empfänger also eine Nachricht gemäß der Erfindung empfängt und damit eine Zahlung leistet, ist sichergestellt, dass er zeitgleich oder zumindest zeitnah auch die Ware oder Dienstleistung empfängt. Auch lassen sich Sicherheitsprüfungen bzw. Abfragen wie z. B. Jugendschutz und dergleichen einbauen. Im Falle eines zeitgleichen Empfangs der Ware oder Dienstleistung kann es sich beispielsweise um eine im E-Mail-Anhang verschickte Datei handeln, welche beispielsweise eine Auskunft enthält oder auch einen angeforderten Zeitungsartikel, ein digitales Buch oder ähnliches. Sofern es sich um eine Ware handelt, welche separat per Post verschickt werden muss, erfolgt die Versendung der Ware vorteilhaft in dem Moment, in welchem der Empfänger den Empfang der E-Mail bestätigt. In jedem Fall ist sichergestellt, dass der Empfänger gemäß der Erfindung die bestellte Ware oder Dienstleistung zeitgleich oder zumindest zeitnah erhält, so dass er darauf vertrauen kann, dass er unverzüglich den Gegenwert für seine Zahlung erhält.

Unabhängig von einer in Anspruch genommenen Ware oder Dienstleistung kann die Erfindung jedoch auch dazu genutzt werden, die E-Mail-Dienstleistung an sich zu bezahlen. Dadurch nämlich, dass der E-Mail-Empfänger für die Leistung des E-Mail-Empfangs zu zahlen hat, muss er vor dem Empfang bestätigen, dass er die E-Mail empfangen möchte. Die Bestätigung kann auch über andere Medien und Dienste, z. B. SMS erfolgen. E-Mails, welche er nicht zu empfangen wünscht, können abgelehnt werden. Auch hierdurch ist ein erhöhter Schutz vor Spam-Mails gewährleistet. Zusätzlich kann die Kostenpflicht des E-Mail-Empfangs auch darin begründet sein, dass der Empfänger von dem E-Mail-Adressanbieter einen erhöhten Service erhält. Dies kann beispielsweise auch einen größeren Speicherplatz für E-Mail-Daten beinhalten.

Zusätzlich kann vorgesehen sein, dass die Empfängeradresse kostenpflichtig von einem Adressanbieter bereitgestellt wird. Somit ist nicht nur der Empfang einer E-Mail kostenpflichtig, sondern gleichzeitig auch die Bereitstellung der Empfängeradresse. Dies bietet für den Adressanbieter den Vorteil, dass er nur solche Adresskonten führen muss, welche in der Praxis tatsächlich auch benutzt werden. Auch können Prüfungen von Legitimation, Alter, Zulässigkeit etc. durchgeführt werden. Somit kommt es nicht zu einem in der Praxis bekannten Missbrauch von E-Mail-Adressen, wobei beispielsweise ein und dieselbe Person eine Vielzahl von E-Mail-Adressen bei einem Anbieter führt und ungenutzt für Dritte blockiert. Der Anbieter muss zusätzlich für ungenutzte E-Mail-Adressen auch keinen Speicherplatz mehr bereithalten.

Die Erfindung sieht darüber hinaus vor, dass die Zahlung zum Zwecke des Empfangs einer E-Mail oder der Bezahlung einer Ware oder Dienstleistung durch Übermittlung einer Authentifizierung an das Online-Buchungssystem eingeleitet wird. Durch die Übermittlung einer Authentifizierung wird sichergestellt, dass eine E-Mail nicht missbräuchlich durch einen Dritten bestätigt wird und somit eine Zahlung ausgelöst wird ohne dass der rechtmäßige Empfänger dies wünscht.

Die Authentifizierung kann beispielsweise eine PIN-Nummer, eine TAN-Nummer, auch mobile TAN, ein Kennwort, ein Barcode, ein QR-Code oder ähnliches sein. In Frage kommen ebenfalls Kennwörter, welche Zahlen und/oder Wörter beinhalten. Darüber hinaus sind auch Bilder oder Gutscheine als Authentifizierung verwendbar.

Das erfindungsgemäße Verfahren sieht darüber hinaus vor, dass Empfängeradresse und/oder Versenderadresse E-Mail-Adressen oder Telefonnummern sind. Alternativ können Empfängeradresse und/oder Versenderadresse auch einem Endgerät des Empfängers oder Versenders in Computernetzwerken zugeordnete Adressen sein. Das erfindungsgemäße Verfahren zur Steuerung eines kostenpflichtigen digitalen Nachrichtenverkehrs lässt sich somit unabhängig davon ausführen, ob es sich bei den dargestellten Adressen um E-Mail-Adressen, Telefonnummern oder auch beispielsweise IP-Adressen handelt. Die Nachrichten können somit per E-Mail, SMS, MMS oder auch mittels einer auf einem Endgerät installierten Anwendungssoftware (App) verschickt werden. Der Empfang bzw. Versand oder auch die Weiterleitung einer solchen Nachricht kann somit über alle Betriebssysteme, Laptops, PC's, Handys, insbesondere auch Smart Phones, erfolgen.

Besonders vorteilhaft ist vorgesehen, dass das Online-Buchungssystem die Zahlung mittels einer ec-Karte, Kreditkarte, Prepaidkarte oder mittels der Abbuchung von einem virtuellen Konto oder im Rahmen einer Telefonabrechnung bewirkt. Der Inhaber der Empfängeradresse hat somit eine Vielzahl von Möglichkeiten, den Empfang einer E-Mail bzw. eine bestellte Ware oder Dienstleistung zu bezahlen. Zum einen kann dies im Rahmen einer üblichen Kartenzahlung erfolgen. Zum anderen ist es jedoch auch möglich, dass ein virtuelles Konto wie beispielsweise ein PayPal-Konto belastet wird oder der Empfänger der E-Mail die Leistung im Rahmen seiner Telefonabrechnung berechnet bekommt. Auch paysafe-Karten und dergleichen sind einsetzbar.

Schließlich sieht die Erfindung vor, dass eine Online-Bestellung durch den Empfang der Nachricht bestätigt wird. Dies erfolgt beispielsweise so, dass der E-Mail Empfänger als Kunde eines Warenhauses dessen Onlineshop nutzt, um eine Ware zu bestellen. Daraufhin sendet ihm der Betreiber des Onlineshops eine E-Mail, welche so eingerichtet ist, dass mit deren Empfang durch den E-Mail-Empfänger eine korrespondierende Zahlung zu dem Einkauf ausgelöst wird. Sofern es sich bei der Ware um ein Produkt handelt, welches als Anhang zu der E-Mail verschickt werden kann, wie beispielsweise ein digitales Buch oder ein Film, erfolgt die Zahlung gleichzeitig mit dem Empfang des Produktes durch den Kunden. Sofern es sich jedoch um ein physisches Produkt handelt, welches separat per Post verschickt werden muss, wird durch den Empfang der Nachricht eine Zahlung des korrespondierenden Betrages ausgelöst. Erst danach, d. h. nach vollendeter Zahlung, wird die Bestellung an das Bestellsystem und/oder ein Warenwirtschaftssystem weitergeleitet, so dass der Kunde ebenfalls zeitnah die bestellte Ware erhält. Grundsätzlich können mit dem erfindungsgemäßen Verfahren alle Arten von Waren und Dienstleistungen bezahlt werden, beispielsweise Gewinnspiele, Musik, Fernsehen, Auskünfte von Service-Centern, Behörden, Parteien, sozialen Einrichtungen und ähnliches.

Im Folgenden wird die Erfindung anhand eines Ausführungsbeispiels näher erläutert.

Zur Ausführung des erfindungsgemäßen Verfahrens zur Steuerung eines kostenpflichtigen digitalen Nachrichtenverkehrs erwirbt ein Kunde eine Empfängeradresse, welche er kostenpflichtig oder kostenlos bei einem Adressanbieter registriert.

Diese E-Mail Adresse kann er nun beispielsweise im Sinne zweier vorteilhafter Aspekte der Erfindung nutzen, nämlich zum einen zum ausschließlichen Empfang einer E-Mail, und zum anderen zur Bezahlung einer bestellten Ware oder Dienstleistung.

Im Rahmen einer ersten Ausführungsvariante erhält der Inhaber der E-Mail Adresse wie üblich eine Nachricht, dass E-Mails in seinem Posteingang eingetroffen sind. Daraufhin kann er diese anhand der Absenderadresse dahingehend prüfen, ob er von diesen Versendern eine E-Mail erwartet oder wünscht. Sofern er die E-Mail zu lesen wünscht, bewirkt er das Öffnen der entsprechenden E-Mail. Dabei muss er vorteilhaft eine Authentifizierung angeben, welche sicherstellt, dass er tatsächlich diejenige Person ist, an welche die E-Mail gerichtet ist. Die Authentifizierung ist beispielsweise ein Kennwort, welches aus Wörtern und Zahlen besteht und zuvor vom Inhaber der E-Mail Adresse festgelegt wurde. Dabei kann das Kennwort lediglich für eine einzige E-Mail festgelegt sein oder grundsätzlich für alle E-Mails des E-Mail Kontos verwendet werden. Mit der korrekten Eingabe des Kennwortes wird die Annahme der E-Mail bestätigt und eine Zahlung als Gegenwert für den Empfang der E-Mail von einem Zahlungskonto des E-Mail Empfängers bewirkt.

Gemäß einer zweiten Ausführungsvariante der Erfindung verwendet der Inhaber der E-Mail Adresse diese, um beispielsweise ein online bestelltes Produkt zu bezahlen. Nach dieser Ausführungsvariante führt der E-Mail Inhaber eine Online-Bestellung in einem Onlineshop durch. Bei diesem Einkauf gibt er seine E-Mail Adresse an. Der Verkäufer der Ware oder Dienstleistung sendet dem Kunden daraufhin eine E-Mail sobald die bestellte Ware oder Dienstleistung lieferbar ist. Diese E-Mail findet der Kunde in seinem E-Mail Postfach und kann entscheiden, ob er diese annehmen möchte oder nicht. Sofern er sich für die Annahme der E-Mail entscheidet, wird gleichzeitig die Online-Bestellung bestätigt und eine zu der Ware oder Dienstleistung korrespondierende Zahlung von seinem Zahlungskonto bewirkt. Diese Zahlung erfolgt beispielsweise durch Abbuchung von einem bei der Bestellung angegebenen Kreditkartenkonto. Wie im erstgenannten Beispiel kann der Empfang der Nachricht auch von der Übermittlung einer Authentifizierung abhängen, so dass es nicht zu einer unauthorisierten Abbuchung kommt. Sofern es sich bei dem bestellten Produkt oder der bestellten Dienstleistung um ein solches handelt, welches der E-Mail als Anhang beigefügt werden kann, beispielsweise ein digitales Buch oder auch ein Film, erhält der Kunde zeitgleich mit seiner Bezahlung auch das korrespondierende Produkt. Sofern es sich jedoch um ein Produkt handelt, welches nur separat per Post verschickt werden kann, wird nach vollendeter Zahlung eine Mitteilung an ein Warenwirtschaftssystem ausgelöst, woraufhin der Kunde zeitnah das gewünschte Produkt zugeschickt bekommt.

Neben den zuvor genannten Ausführungsbeispielen, welche anhand eines E-Mail Verkehrs dargestellt wurden, kann die Erfindung ebenfalls mit Hilfe von SMS, MMS oder auch gerätegebundenen Applikationen durchgeführt werden. Ebenfalls sind Variationen in der Art der Authentifizierung möglich oder auch Variationen in der Art des Zahlungsvorgangs.

## Patentansprüche

1. Verfahren zur Steuerung eines kostenpflichtigen digitalen Nachrichtenverkehrs, wobei zumindest eine Nachricht mittels eines Nachrichten-Servers von einer Versenderadresse an eine Empfängeradresse gesendet wird, und wobei ein Online-Buchungssystem eine zu dem Nachrichtenverkehr korrespondierende Zahlung bewirkt,
**dadurch gekennzeichnet,**
**dass** die Nachricht an der Empfängeradresse nur empfangen werden kann, wenn die korrespondierende Zahlung von einem der Empfängeradresse zugeordneten Zahlungskonto bewirkt wird.

2. Verfahren nach Anspruch 1, **dadurch gekennzeichnet, dass** die Empfängeradresse kostenpflichtig von einem Adressanbieter bereitgestellt wird.

3. Verfahren nach Anspruch 1 oder 2, **dadurch gekennzeichnet, dass** die Zahlung durch Übermittlung einer Authentifizierung an das Online-Buchungssystem eingeleitet wird.

4. Verfahren nach Anspruch 3, **dadurch gekennzeichnet, dass** die Authentifizierung eine PIN-Nummer, eine TAN-Nummer, ein Kennwort, einen Barcode oder einen QR-Code beinhaltet.

5. Verfahren nach einem der Ansprüche 1 bis 4, **dadurch gekennzeichnet, dass** Empfängeradresse und/oder Versenderadresse E-Mail-Adressen oder Telefonnummern sind.

6. Verfahren nach einem der Ansprüche 1 bis 4, **dadurch gekennzeichnet, dass** Empfängeradresse und/oder Versenderadresse einem Endgerät des Empfängers oder Versenders in Computernetzwerken zugeordnete Adressen sind.

7. Verfahren nach Anspruch 6, **dadurch gekennzeichnet, dass** dieses mittels einer auf einem Endgerät installierten Anwendungssoftware (App) ausführbar ist.

8. Verfahren nach einem der vorhergehenden Ansprüche, **dadurch gekennzeichnet, dass** dieses mittels eines PCs oder Mobiltelefons ausführbar ist.

9. Verfahren nach einem der vorhergehenden Ansprüche, **dadurch gekennzeichnet, dass** das Online-Buchungssystem die Zahlung mittels einer ec-Karte, Kreditkarte, Prepaidkarte oder mittels der Abbuchung von einem virtuellen Konto oder im Rahmen einer Telefonabrechnung bewirkt.

10. Verfahren nach einem der vorhergehenden Ansprüche, **dadurch gekennzeichnet, dass** durch den Empfang der Nachricht eine Online-Bestellung bestätigt wird.

11. Verfahren nach Anspruch 10, **dadurch gekennzeichnet, dass** die Nachricht als Anlage ein bestelltes Produkt oder einen bestellten Service beinhaltet.

12. Verfahren nach Anspruch 10, **dadurch gekennzeichnet, dass** die Bestellung erst nach vollendeter Zahlung an ein Bestellsystem und/oder ein Warenwirtschaftssystem weitergeleitet wird.
